**Europäisches Patentamt**

**European Patent Office**

**Office européen des brevets**

(19)

(11) Publication number: **0 130 547**
**B1**

(12) **EUROPEAN PATENT SPECIFICATION**

(45) Date of publication of patent specification: **20.09.89**

(21) Application number: **84107379.4**

(22) Date of filing: **27.06.84**

⑩ Divisional applications 87117881, 87117882 filed on 03.12.87.

(51) Int. Cl.⁴: **H 02 H 7/09**

(54) Voltage protective apparatus for variable-frequency power system.

(30) Priority: **30.06.83 JP 120810/83**
**30.06.83 JP 120811/83**

(43) Date of publication of application:
**09.01.85 Bulletin 85/02**

(45) Publication of the grant of the patent:
**20.09.89 Bulletin 89/38**

(84) Designated Contracting States:
**CH DE GB LI**

(56) References cited:
**EP-A-0 105 077**
**US-A-4 118 749**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Takata, Nobuharu c/o Mitsubishi Denki K.K.**
**Power & Ind. Sys. Center 1-2, Wadasakicho 1 chome**
**Hyogo-ku Kobe-shi Hyogo (JP)**
Inventor: **Ito, Makoto c/o Mitsubishi Denki K.K.**
**Power & Ind. Sys. Center 1-2, Wadasakicho 1 chome**
**Hyogo-ku Kobe-shi Hyogo (JP)**
Inventor: **Hino, Sakio c/o Mitsubishi Denki K.K.**
**Power & Ind. Sys. Center 1-2, Wadasakicho 1 chome**
**Hyogo-ku Kobe-shi Hyogo (JP)**
Inventor: **Kaneko, Seiji c/o Mitsubishi Denki K.K.**
**Power & Ind. Sys. Center 1-2, Wadasakicho 1-chome**
**Hyogo-ku Kobe-shi Hyogo (JP)**

(74) Representative: **Eisenführ & Speiser**
**Martinistrasse 24**
**D-2800 Bremen 1 (DE)**

Courier Press, Leamington Spa, England.

## Description

The present invention relates to a voltage protective apparatus fo a variable-frequency electric power system.

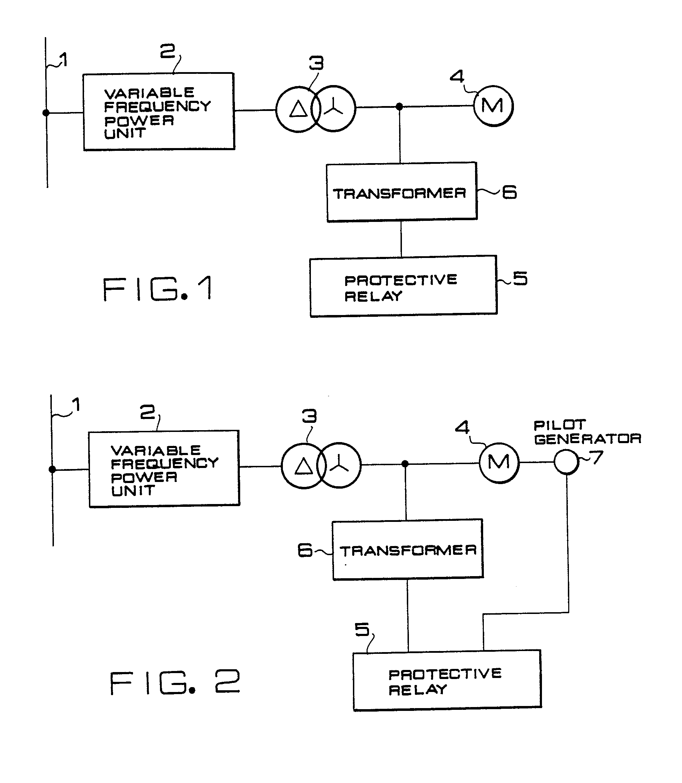

Fig. 1 is a block diagram of a conventional voltage protective apparatus, wherein there are shown an AC power supply line 1, a variable-frequency power unit 2, an output transformer 3, and an AC motor 4 which is a load in the power system. The secondary voltage of the output transformer 3 is detected and inputted to a protective relay (low-voltage or overvoltage relay) serving as a voltage detector. Also shown is an instrument transformer 6 for converting the secondary voltage of the output transformer 3 to a value suited for the protective relay 5.

The AC motor 4 receives via the output transformer 3 electric power from the AC power supply line 1 with its frequency controlled by the variable-frequency power unit 1, so that the AC motor 4 is rotated at a speed corresponding to the system frequency f inputted thereto. In order to prevent overheating of the AC motor 4 that may be induced by overexcitation during a low-frequency operation, the output of the variable-frequency power unit 2 is so controlled that the following relationship is maintained between the system voltage E and the system frequency f.

$$E = f \times Vs/fs \qquad (1)$$

where fs: commercial frequency
Vs: normal operation voltage at commercial frequency.

In detection of the interphase (or phase) voltage relative to the AC motor 4, first the interphase (or phase) voltage Vm obtained at the secondary winding of the instrument transformer 6 and expressed by Eq. (2) shown below is introduced to the protective relay 5 and, in case the voltage Vm is greater than a threshold value of the protective relay 5, a detection signal is outputted to indicate an abnormal voltage representing a fault in the power system.

$$Vm = F \cdot (Vs/fs) \cdot Ko \qquad (2)$$

where Ko: constant.

However, since the detection voltage Vm is affected as well as the system voltage E by the system frequency f, if any overvoltage (or low voltage) is generated in a low-frequency driving mode of the AC motor 4, the voltage detection (or fault detection in a normal state) is rendered impossible.

That is, the protective relay 5 is set at a detection sensitivity within a certain range selected on the basis of the detection voltage Vm obtained when the system frequency f is equal to the commercial frequency fs and the system voltage E is equal to the normal operation voltage Vs.

It is presumed in the following description that a detection value is selected for an overvoltage of 120 to 140% and a low voltage of 80 to 70%.

When the sensitivity is so established as to detect an overvoltage or a low voltage at a frequency below the commercial frequency fs, the disadvantage existed that the detection voltage Vm comes to be smaller than Vs×40% in case the system frequency is lower than fs×40%, so that a low-voltage detection is executed even in a normal state while any overvoltage being as high as 120 t0 140% of a normal value could not be detected.

From EP—A—0 105 077, which has to be considered under Art. 54 (3) and (4) EPC, a protective apparatus for a variable voltage and variable frequency electric power system is known, in which the sensitivity of the protective apparatus is changed in response to the frequency of the power system.

It is an object of the present invention to provide a voltage protective apparatus capable of detecting any abnormal voltage in a variable-frequency power system with certainty even when the system is in a low-frequency operation mode, thereby enhancing the functional reliability in protection of the system.

According to the invention, a voltage protective apparatus is provided for a variable-frequency electric power system supplying an AC motor connected thereto, comprising: a protective relay arranged to compare a signal corresponding to an interphase or phase voltage of the system with a threshold value, and a pilot generator coupled to the shaft of the AC motor and adapted to produce an output signal proportional to the frequency of the power system, the arrangement being such that said output signal of the pilot generator is fed to an input of said protective relay for setting said threshold value.

Fig. 1 is a block diagram of a conventional voltage detecting apparatus for a variable-frequency power system; and

Fig. 2 is a block diagram of an embodiment of the voltage detecting apparatus of this invention for a variable-frequency power system.

Hereinafter an exemplary embodiment of the present invention will be described with reference to the accompanying drawing.

In Fig. 2, a pilot generator 7 is coupled with the shaft of an AC motor 4 and produces an output es, which is proportional to the rotational speed of the motor 4 and is inputted to a protective relay 5 as a threshold set signal. The protective relay 5 is so connected that the detected secondary voltage Vm of an output transformer 3 is inputted thereto, and its threshold value is increased or decreased in proportion to the voltage es which is the threshold set signal. Since other components are equal to those shown previously in Fig. 1, they are represented by the same reference numerals.

In this arrangement where the output voltage es of the pilot generator 7 is altered in proportion to the system frequency f, the threshold value of the protective relay 5 always receiving the voltage es is not kept fixed but is increased or decreased in accordance with each change in the frequency. Therefore, upon occurrence of any fault in the power system, the protective relay 5 compares the input interphase (or phase) voltage with the threshold value proportional to the system frequency f in the abnormal state of the system. In an exemplary case where the relay sensitivity is so established as to detect a 130% (or 75%) voltage when the system frequency f is equal to a commercial frequency fs, if the frequency f at the occurrence of an abnormal voltage is fs×40%, the threshold value is lowered to 40% so that a detection signal is outputted properly even at the abnormal system voltage.

The above embodiment may be so modified that the output of the pilot generator 7 and the secondary voltage of the output transformer 3 fed to the protective relay 5 via the instrument transformer may be fed via input devices (not shown) respectively through signal level conversion.

In case the AC motor 4 is of induction type, the output es of the pilot generator 7 is not exactly proportional to the system frequency f. However, since the slip thereof is merely 5% or so, it is ignorable in practical use.

It is also obvious that the processing in the protective relay 5 may be in either an analog or digital mode.

Furthermore, the system load is not limited to an AC motor alone, and similar effect is attainable practically in any power system where the voltage-to-frequency ratio can be maintained constant under control.

## Claim

A voltage protective apparatus for a variable-frequency electric power system (1—3) supplying an AC motor (4) connected thereto, comprising: a protective relay (5) arranged to compare a signal corresponding to an interphase or phase voltage of the system with a threshold value, and a pilot generator (7) coupled to the shaft of the AC motor (4) and adapted to produce an output signal (es) proportional to the frequency of the power system, the arrangement being such that said output signal of the pilot generator is fed to an input of said protective relay (5) for setting said threshold value.

## Patentanspruch

Spannungsschutzeinrichtung für ein Stromversorgungssystem (1—3) mit variabler Frequenz zum Speisen eines daran angeschlossenen Wechselstrommotors (4), genkennzeichnet durch ein Schutzrelais (5), das ein einer Zwischenphasen- oder Phasenspannung entsprechendes Signal mit einem Schwellenwert vergleicht, und einen mit der Welle des Wechselstrommotors (4) gekuppelten Pilotgenerator (7), der ein zur Frequenz des Stromversorgungssystems proportionales Ausgangssignal (es) erzeugt, das einem Eingang des Schutzrelais (5) zur Einstellung des Schwellenwertes zugeleitet wird.

## Revendication

Dispositif de protection de la tension pour un système électrique de puissance (1 à 3) à fréquence variable alimentant un moteur électrique (4) à courant alternatif qui y est connecté, comprenant un relais de protection (5) adapté pour comparer un signal correspondant à une tension entre phases ou entre phase et neutre du système avec une valeur de seuil, et un générateur pilote (7) couplé à l'arbre du moteur (4) à courant alternatif et adapté pour produire un signal de sortie (es) proportionnel à la fréquence du système de puissance, l'adaptation étant telle que le signal de sortie précité du générateur pilote est amené à une entrée dudit relais de protection (5) pour régler la valeur de seuil susdite.

FIG.1

FIG. 2